# EUROPÄISCHE PATENTSCHRIFT

(11) **EP 0 784 820 B1**
(45) Veröffentlichungstag und Bekanntmachung des Hinweises auf die Patenterteilung: **26.04.2006**
(21) Anmeldenummer: 95922526.9
(22) Anmeldetag: 07.06.1995
(51) Int. Cl.: G06F 13/38

(54) **VORRICHTUNG UND VERFAHREN ZUR STEUERUNG EINES DATENBUSSES**
DATA BUS CONTROL DEVICE AND PROCESS
DISPOSITIF ET PROCEDE DE COMMANDE D'UN BUS DE DONNEES

(43) Veröffentlichungstag der Anmeldung: 23.07.1997
(73) Patentinhaber: International Business Machines Corporation, Armonk, N.Y. 10504 (US)
(72) Erfinder: NEUMANN, Martin, D-71063 Sindelfingen (DE); GÖTZE, Volkmar, D-71120 Grafenau (DE)
(74) Vertreter: Teufel, Fritz
(86) Internationale Anmeldenummer: PCT/EP1995/002188
(87) Internationale Veröffentlichungsnummer: WO 1996/041273

(56) Entgegenhaltungen:
- EP-A- 0 441 707
- US-A- 4 583 195

## Beschreibung

### Technisches Gebiet

Die Erfindung betrifft eine Vorrichtung und ein Verfahren zur Steuerung eines Daten-Übertragungskanals oder Datenbusses, insbesondere eines Datenbusses, auf dem die Daten gemäß eines vorgegebenen Übertragungsprotokolls oder Busprotokolls bitseriell übertragen werden, sowie die Verwendung einer hierarchischen Prozessorarchitektur zur Steuerung eines Datenbusses. Die Erfindung ist anwendbar für die Steuerung einer Vielzahl von Datenbussen, auf denen Daten nach unterschiedlichen Übertragungsprotokollen übertragen werden. Die Erfindung ist insbesondere geeignet für die Steuerung einer Vielzahl von Feld-Datenbussen oder Feldbussen für allgemeine Anwendungen und insbesondere für die Steuerung von Feldbussen in Kraftfahrzeugen.

### Stand der Technik

Daten-Übertragungskanäle oder Datenbusse dienen der Datenübertragung zwischen elektronischen Datenverarbeitungsanlagen, Peripheriegeräten und der Umwelt. Diese Datenübertragung hat nach gewissen Regeln zu erfolgen, dem Übertragungsprotokoll oder Busprotokoll. Aufgrund der historischen Entwicklung haben sich eine Vielzahl von Datenbussen etabliert, die eine Datenübertragung gemäß dem jeweiligen, Datenbusspezifischen Busprotokoll erlauben.

Bei den Datenbussen unterscheidet man zwischen bitseriellen Datenbussen, bei denen die Datenbits einzeln und sequentiell übertragen werden, und bitparallelen Datenbussen, bei denen jeweils eine bestimmte Anzahl von Datenbits, ein byte, parallel übertragen wird.

Unter den seriellen Datenbussen nehmen die Feld-Datenbusse oder Feldbusse eine Sonderstellung ein. Ein Feldbus ist ein lokales Kommunikationsnetzwerk, das es ermöglicht, die Punkt-zu-Punkt Verbindungen etwa zwischen einem oder mehreren Meßwertaufnehmern und einer Datenverarbeitungsvorrichtung oder zwischen einer Datenverarbeitungsvorrichtung und einer Anzeigeeinheit zu ersetzen. Das Anwendungsgebiet von Feldbussen ist gegenwärtig insbesondere die industrielle Fertigungstechnik. Darüberhinaus gibt es erste Anwendungen für den Einsatz von Feldbussen im Kraftfahrzeug.

Gerade bei den Feldbussen hat sich eine Vielzahl von Busvarianten am Markt etabliert, die jeweils für einen bestimmten Anwendungszweck konzipiert und optimiert wurden. Üblicherweise benötigt jede dieser Feldbusvarianten eine eigene, proprietäre Steuerung, da die zugehörigen Busprotokolle unterschiedlich sind.

In R. Prasad und J.-D. Decotignie: "Die Feldbusse - Der grosse Basar, Teil 1: Die Probleme der industriellen Kommunikation", Bulletin Schweizer Elektrotechnischer Verein/Verbund Schweizer Elektrizitätswerke, Volume 84, Nr. 21, 22. Oktober 1993, Seite 11-17, wird eine Einordnung der Feldbusse in die gegenwärtigen Kommunikationswelt gegeben und auf die spezifischen Probleme beim Einsatz von Feldbussen hingewiesen. Es wird am Beispiel der Steuerung einer Werkzeugmaschine auf die Problematiken des zyklisch oder des verlangten Datenaustausches, die Art der Kommunikationsbeziehungen und Dateneigenschaften, die Gültigkeitsdauer und Antwortzeiten und die Komplexität der Prozesskombinationen eingegangen. Weiterhin wird auf die Bedeutung von Sichterheits- und Zuverlässigkeitaspekten beim Einsatz von Feldbussen hingewiesen.

In R. Prasad und J.-D. Decotignie: "Die Feldbusse - Der grosse Basar, Teil 2: Das Pflichtenheft", Bulletin Schweizer Elektrotechnischer Verein/Verbund Schweizer Elektrizitätswerke, Volume 84, Nr. 25, 17. Dezember 1993, Seite 26-30, werden die Eigenschaften der Geräte und der Daten für den Entwurf eines Feldbusnetzes berücksichtigt, Topologien und Übertragungsmedien vorgestellt und ein Pflichtenheft für Feldbusse erstellt. Dabei werden insbesondere die Dienste der Applikationsschicht erfaßt und die Funktion der Netzverwaltung festgelegt.

In J.-D. Decotignie: "Die Feldbusse - Der grosse Basar, Teil 3: Vergleich von existierenden Lösungen", Bulletin Schweizer Elektrotechnischer Verein/Verbund Schweizer Elektrizitätswerke, Volume 84, Nr. 21, 22. Oktober 1993, Seite 27-34, werden verschiedene etablierte Feldbussysteme, wie beispielsweise BITBUS, CAN (Controller Area Network), FIP (Field Instrumentation Protocol), HART, INTERBUS-S, LON, MIL-STD-1553, SERCOS und PROFIBUS (deutscher Feldbusstandard DIN 19245), vorgestellt und verglichen. Es wird herausgearbeitet, daß gegenwärtig zahlreiche Feldbusvarianten existieren, daß aber keine dieser Feldbusvarianten das gesamte Spektrum der Benutzeranforderungen decken kann.

In W. Lawrenz: "AUTOBUSSE für die Sensor/Aktor-Vernetzung am Beispiel CAN", Automatisierungstechnische Praxis, Volume 35, Nr. 8, August 1993, wird das Protokoll und die Eigenschaften eines automotiven Feldbusses, des CAN (Controller Area Network) Feldbusses, eingehend beschrieben. Hierfür werden komplette Steuerungen vorgestellt, sowohl für die schaltungstechnische Komponente als auch für die programmierungstechnische Komponente.

Weiterhin werden verschiedene Schaltkreise von mehreren Herstellern vorgestellt, die für die Steuerung der verschiedenen automotiven Feldbusse jeweils erforderlich sind.

In der Europäischen Patentschrift 0,441,707, B1 wird eine Vorrichtung zur Steuerung eines Datenbusses beschrieben, die eine hierarchische Prozessorarchitektur aufweist. Dabei übernimmt ein dedizierter Prozessor die Steuerung des Datenbusses.

### Nachteile des Standes der Technik

Aufgrund der unterschiedlichen und größtenteils proprietären Busprotokolle der einzelnen Datenbusse ist gegenwärtig für jeden Datenbus eine spezifische Steuerung erforderlich. Zusammen mit der Vielzahl von gegenwärtig auf dem Markt etablierten Datenbusvarianten existiert eine große Anzahl an Datenbussteuerungen, die jeweils nur für einen bestimmten Bustyp verwendbar sind.

Dies verursacht hohe Kosten für die Hersteller von Datenbussteuerungen, da die Stückzahlen aufgrund der nur eingeschränkten Einsatzmöglichkeiten gering sind. Für die Anwender von Datenbussteuerungen erfordert die Vielzahl an Datenbussteuerungen einen hohen Kostenaufwand aufgrund der erforderlichen Bereitstellung mehrerer Datenbussteuerungen, um mit den verschiedenen Datenbussen arbeiten zu können.

Weiterhin erfordert die Anpassung an einen neuen Datenbustyp und dessen Datenbusprotokoll eine Änderung der Schaltungstechnik der bestehenden Datenbussteuerungen, insbesondere eine Erweiterung oder Veränderung einzelner schaltungstechnischer Funktionen der Datenbussteuerung, und damit einen hohen Entwicklungs-, Zeit- und Kostenaufwand.

### Aufgabe

Der Erfindung liegt daher die Aufgabe zugrunde, eine Steuerung für einen Datenbus zu entwickeln, welche die Steuerung der gegenwärtig existierenden und insbesondere der zukünftig zu entwickelnden Datenbusse mit den jeweils zugehörigen Datenbusprotokollen erlaubt. Die Anpassung an neue Datenbusprotokolle soll dabei mit geringem Zeit- und Kostenaufwand bewerkstelligt werden. Die Erfindung soll zudem eine Steuerung bereitstellen, die eine hohe Datenübertragungsgeschwindigkeit auf dem Datenbus ermöglicht.

### Lösung der Aufgabe

Diese Aufgabe ist erfindungsgemäß gelöst durch eine Vorrichtung, welche die im Anspruch 1 aufgeführten Merkmale aufweist.

Dabei ist vorteilhaft, daß durch das Merkmal einer hierarchischen Prozessorarchitektur mit mindestens zwei Prozessorebenen, die Steuerungsaufgaben so auf die verschiedenen Prozessorebenen verteilt werden können, daß die verschiedenen Prozessorebenen für einen bestimmten Steuerungsteil optimiert werden können; dadurch wird eine hohe Signalverarbeitungsgeschwindigkeit und eine hohe Datenverarbeitungsgeschwindigkeit erzielt. Weiterhin ist es vorteilhaft, daß aufgrund der Aufteilung und Optimierung der Steuerungsaufgaben die hohe Signalverarbeitungsgeschwindigkeit mit einer einfachen Schaltungstechnik realisiert werden kann; dadurch ist die Steuervorrichtung zuverlässig im Betrieb und kostengünstig in der Herstellung. Weiterhin ist vorteilhaft, daß die hierarchische Prozessorarchitektur und die Verteilung der Steuerungsaufgaben auf verschiedenen Prozessorebenen eine zeit- und kostengünstige Anpassung an neue Datenbustypen und die zugehörigen Datenbusprotokolle erlaubt, insbesondere ohne Erweiterung oder Veränderung schaltungstechnischer Einzelfunktionen.

In einer Ausgestaltung der Erfindung weist die Vorrichtung die Merkmale des Anspruches 3 auf.

Dabei ist es vorteilhaft, daß die erste programmierbare Ablaufsteuerung, die als freiprogrammierbarer Sequenzer ausgeführt sein kann oder als Mikroprozessor mit eingeschränktem Befehlsatz ausgeführt sein kann, mit einem Befehlsatz ausgerüstet ist, der für die spezielle Anwendung optimiert ist und der eine schnelle Instruktionsausführung und eine hohe Verarbeitungsgeschwindigkeit der auf dem Datenbus übertragenen Binärzeichen ermöglicht; die erste programmierbare Ablaufsteuerung übernimmt beispielsweise die Steueraufgaben auf der Binärzeichenebene und besitzt einen für diese Steueraufgaben speziell abgestimmten Befehlssatz. Weiterhin ist es vorteilhaft, daß die erste programmierbare Ablaufsteuerung mit einer Überabtastung der Datenbusinformation zu einer sicheren Entscheidung hinsichtlich des Bitwertes 0/1 kommt, wobei die Entscheidungskriterien frei programmierbar sind. Weiterhin ist es vorteilhaft, daß aufgrund der freien Programmierbarkeit der ersten Ablaufsteuerung die Anpassung an neue Datenbustypen ohne Erweiterung oder Veränderung schaltungstechnischer Einzelfunktionen zeit- und kostengünstig erreicht wird. Weiterhin ist es vorteilhaft, daß die zweite programmierbare Ablaufsteuerung, die als freiprogrammierbarer Sequenzer ausgeführt sein kann oder als Mikroprozessor mit eingeschränktem Befehlsatz ausgeführt sein kann, mit einem Befehlsatz ausgerüstet ist, der für die spezielle Anwendung optimiert ist und der eine schnelle Instruktionsausführung und eine hohe Verarbeitungsgeschwindigkeit der Datenworte ermöglicht; die zweite programmierbare Ablaufsteuerung übernimmt beispielsweise die Steueraufgaben auf der Datenwortebene und besitzt einen für diese Steueraufgaben speziell abgestimmten Befehlssatz. Ein Datenwort setzt sich dabei aus einer Anzahl von Binärzeichen zusammen, wobei die Anzahl der Binärzeichen je Datenwort in der Regel durch das Datenbusprotokoll vorgegeben wird, und beispielsweise ein Datenwort aus ein bis acht Bits bestehen kann. Weiterhin ist es vorteilhaft, daß aufgrund der freien Programmierbarkeit der zweiten Ablaufsteuerung die Anpassung an neue Datenbusprotokolle ohne Erweiterung oder Veränderung schaltungstechnischer Einzelfunktionen zeit- und kostengünstig erreicht wird. In einer weiteren Ausgestaltung der Erfindung weist die Vorrichtung die Merkmale des Anspruches 4 auf.

Dabei ist es vorteilhaft, daß die Synchronisation der Taktsignale durch die erste Ablaufsteuerung erfolgt, die aufgrund ihres zugeschnittenen Befehlssatzes diese Synchronisation mit hoher Geschwindigkeit durchführen kann und dadurch hohe Übertragungsraten auf dem Datenbus erlaubt. Weiterhin ist es vorteilhaft, daß diese hohen Übertragungsraten von beispielsweise 10 MHz bei gleichzeitiger hoher Flexibilität hinsichtlich des steuerbaren Datenbustypes erzielt werden; damit verbunden ist nicht nur ein Zeitvorteil, sondern auch ein Kostenvorteil, sowohl hinsichtlich der Übertragungs- als auch der Betriebskosten der Steuerung. Wenngleich der Datenbus kein Taktsignal auf einer separaten Taktleitung mitführt, kann das Taktsignal, welches der Datenbus implizit aufweist, aus der Abfolge der auf dem Datenbus übertragenen Daten ermittelt werden.

In einer weiteren Ausgestaltung der Erfindung weist die Vorrichtung die Merkmale der Ansprüche 5 und 6 auf.

Dabei ist es vorteilhaft, daß die Filterung der Binärzeichen variabel und programmierbar ist und somit einfach, zeit- und kostengünstig an veränderte Übertragungs- oder Protokollbedingungen angepaßt werden kann. Die Filterung der Binärzeichen dient beispielsweise einem Ausfiltern von Störungen auf dem Übertragungskanal; dieses Ausfiltern kann beispielsweise durch Einzel-Abtastung des Empfangssignales zu einem bestimmten Zeitpunkt, durch Mehrfachabtastung mit entsprechender Mehrheitslogik, etwa majority-Entscheidungsstrategien, oder durch Prüffenstertechniken erfolgen. Weiterhin ist vorteilhaft, daß die erste Ablaufsteuerung durch entsprechende Mittel das Taktsignal für die zweite Ablaufsteuerung bereitstellt und somit eine zuverlässige und kostengünstige Kommunikation zwischen den beiden Ablaufsteuerungen gewährleistet wird.

In einer weiteren Ausgestaltung der Erfindung weist die Vorrichtung die Merkmale des Anspruches 7 auf.

Dabei ist es vorteilhaft, daß die Ausführung eines Sende-/Empfangs-Protokolles durch die zweite Ablaufsteuerung erfolgt, die aufgrund ihres zugeschnittenen Befehlssatzes diese Ausführung mit hoher Geschwindigkeit durchführen kann und dadurch hohe Übertragungsraten auf dem Datenbus erlaubt. Weiterhin ist es vorteilhaft, daß die hohen Übertragungsraten bei gleichzeitiger hoher Flexibilität hinsichtlich des auszuführenden Datenbusprotokolles erzielt wird; damit verbunden ist nicht nur ein Zeitvorteil, sondern auch ein Kostenvorteil, sowohl hinsichtlich der Übertragungs- als auch der Betriebskosten der Steuerung. Weiterhin ist es vorteilhaft, daß durch eine mögliche Beschränkung der Protokollbearbeitung auf die zweite Ablaufsteuerung eine Änderung oder Anpassung des Datenbusprotokolles nur durch Veränderung des Steuerprogrammes für die zweite Ablaufsteuerung erzielt werden kann. Die zweite Ablaufsteuerung ist damit vorteilhaft für die speziellen Aufgaben des Kommunikationsaufbaues und der Initialisierung des Datenbusses optimiert; dies kann umfassen: Die Adressenidentifikation, wobei die Größe des Adreßfeldes innerhalb von systembedingten Grenzen frei programmierbar ist, das Senden/Empfangen der Adressen und der Nutzdaten sowie gegebenenfalls der Prüfdaten und der Handshake-Daten.

In einer weiteren Ausgestaltung der Erfindung weist die Vorrichtung die Merkmale der Ansprüche 8 und 9 auf.

Dabei ist es vorteilhaft, daß die Entscheidung über die Datenbus-Zugriffsberechtigung und Adresserkennung aufgrund des optimierten Befehlssatzes der zweiten Ablaufsteuerung mit hoher Geschwindigkeit erfolgt. Das Gleiche gilt vorteilhafterweise für die Fehlererkennung. Die Fehlererkennung kann beispielsweise durch Paritätsbits oder durch ein zyklisches Blockprüfungsverfahren entsprechend den Anforderungen des Datenbusprotokolles erfolgen. Im Fall des zyklischen Blockprüfungsverfahrens ist es vorteilhaft, daß das Prüfungspolynom frei programmiert werden kann. Weiterhin kann die zweite programmiebare Ablaufsteuerung auch Mittel zur Fehlerkorrektur aufweisen; die Fehlerkorrektur ist dadurch vorteilhaft mit hoher Geschwindigkeit und geringem zusätzlichem Bauelementeaufwand möglich.

In einer weiteren Ausgestaltung der Erfindung weist die Vorrichtung die Merkmale des Anspruches 10 auf.

Dabei ist es vorteilhaft, daß separate Sende- und Empfangsspeicher die Möglichkeit bieten, gesendete Daten gleichzeitig in den Empfangsspeicher einzulesen, um im Falle eines Übertragungsfehlers Kontrollfunktionen zu aktivieren. Die Realisierung der Sende- und Empfangsspeicher ist grundsätzlich mit verschiedenen Speicherarchitekturen möglich; die Realisierung als FIFO-Speicher bietet die Vorteile des geringen Adressierungsaufwandes, des schnellen Zugriffs und der kostengünstigen Realisierung.

In einer weiteren Ausgestaltung der Erfindung weist die Vorrichtung die Merkmale der Ansprüche 11 und 12 auf.

Dabei ist es vorteilhaft, daß verschiedene Datenformate über Register ausgewählt werden können, so daß Übertragungsformate wie beispielsweise Return-to-Zero (RZ), Non-Return-to-Zero (NRZ), Manchester oder Bit-Stuffing Methoden verarbeitet werden können. Das Bit-Stuffing dient dabei der Takt-Sychronisation und fügt ein komplementäres Bit ein, wenn eine Anzahl identischer Bits übertragen wurde. Hinsichtlich der Registrierung der Identifikationsbitfolgen ist es vorteilhaft, daß die Größe und Bitbreite dieser Register eingestellt werden kann und somit eine Anpassung an neue Datenbusprotokolle ohne Erweiterung oder Veränderung schaltungstechnischer Einzelfunktionen zeit- und kostengünstig erreicht wird. Die Bereitstellung von Status- und Kontrollinformation, wie beispielsweise die Belegung und den Status der FIFO-Speicher, die Interrupt-Maskierung oder den Fehlertatbestand, erlaubt vorteilhafterweise die Überwachung der Steuerfunktionen mit geringem Kostenaufwand und hoher Geschwindigkeit.

In einer weiteren Ausgestaltung der Erfindung weist die Vorrichtung die Merkmale des Anspruches 13 auf.

Dabei ist es vorteilhaft, daß die Vorrichtung auch für die Steuerung von seriellen Datenbussen geeignet ist, und insbesondere die Steuerung sowohl der gegenwärtig bekannten als auch der zukünftig entwickelten industriellen Feldbusse und automotiven Feldbusse ermöglicht, wie beispielsweise dem ABUS (Automotive Bit-serial Universal-interface System), CAN-Bus (Controller Area Network), SAE-Bus J1850 oder dem VAN-Bus (Vehicle Area Network). Die Adaptionsmöglichkeit wird vorteilhafterweise aufgrund der hierarchischen Prozessorarchitektur ohne oder mit nur geringer Erweiterung oder Veränderung schaltungstechnischer Einzelfunktionen zeit- und kostengünstig erreicht. Aufgrund der Arbeitsteilung und Spezialisierung der einzelnen Prozessorebenen wird eine hohe Verarbeitungsgeschwindigkeit bei gleichzeitig geringem Kostenaufwand erzielt.

In einer weiteren Ausgestaltung der Erfindung weist die Vorrichtung die Merkmale des Anspruches 14 auf.

Dabei ist es vorteilhaft, daß der PowerPC Mikrocontroller aufgrund seiner RISC-Architektur besonders für die Bearbeitung von Steuerungsaufgaben mit hoher Geschwindigkeit geeignet ist; die Integration der erfindungsgemäßen Datenbus-Steuerung ist mit geringem Kosten- und Entwicklungsaufwand erreichbar und gewährleistet einen zuverlässigen und kostengünstigen Betrieb. Der PowerPC Mikrocontroller ist ein Mitglied der PowerPC Prozessorfamilie, einer Familie moderner und hochleistungsfähiger Mikroprozessoren und Mikrocontroller. Der PowerPC Mikrocontroller kann über die Vetriebswege der IBM Deutschland beziehungsweise der IBM Corporation erworben werden. Weitherhin ist es vorteilhaft, daß gleichzeitig andere Funktionen auf einer gemeinsamen Funktionsplattform integriert werden können, beispielsweise in einem Kraftfahrzeug Funktionen der Motorsteuerung, Klimasteuerung, Navigation, Anzeigeeinheiten sowie Audio- und Videoapplikationen. Die Funktionsplattform weist dabei neben einem PowerPC Mikrocontroller mit intergrierter hierarchischer Prozessorarchitektur noch DRAM-Speicher, Anzeigeeinheiten sowie Bustreiber und Businterfaces für die verschiedenen Datenbusse auf; diese Bausteine teilen sich die anfallenden Aufgaben vorteilhaft, beispielsweise übernimmt ein Bustreiber das Überwachen eines Pegelfensters innerhalb der auf dem Datenbus übertragenen Daten.

Die Aufgabe ist weiterhin erfindungsgemäß gelöst durch ein Verfahren, welches die im Anspruch 15 aufgeführten Verfahrensschritte aufweist.

Dabei ist es vorteilhaft, daß das getrennte Verarbeiten von Binärzeichen und Datenworten in verschiedenen Prozessorebenen und die damit einhergehende Spezialisierung der Verfahrensschritte eine hohe Verarbeitungsgeschwindigkeit mit geringem schaltungstechnischen Aufwand ermöglicht und insbesondere ein hohes Maß an Flexibilität des Steuerungsverfahrens hinsichtlich der Anpassung an neue Datenbusprotokolle bietet.

In einer Ausgestaltung der Erfindung weist das Verfahren die Verfahrensschritte des Anspruches 16 auf.

Dabei ist es vorteilhaft, daß die Be- und Verarbeitung der über den Datenbus übertragenen Binärzeichen beziehungsweise der Datenworte, insbesondere das Synchronisieren der Taktsignale beziehungsweise das Festlegen von Bitlängen, durch eine erste beziehungsweise zweite Ablaufsteuerung, die frei programmierbar ist und einen für die zu bearbeitenden Steuerungsaufgaben optimierten Befehlssatz aufweist, schnell, zuverlässig und mit geringem Kostenaufwand geleistet wird. Es ist insbesondere vorteilhaft, daß in dem erfindungsgemäßen Verfahren beispielsweise Adreßfeldgrößen oder Prüfpolynome frei programmiert werden können und somit ein hohes Maß an Flexibilität des Steuerungsverfahrens hinsichtlich der Anpassung an neue Datenbusprotokolle bietet.

In einer weiteren Ausgestaltung der Erfindung weist das Verfahren die Verfahrensschritte nach Anspruch 17 auf.

Dabei ist es vorteilhaft, daß durch die Verwendung von weitgehend äquivalenten Instruktionen für das Senden und das Empfangen von Daten über den Datenbus und durch das erfindungsgemäße Abspeichern dieser Instruktionen ein Wechsel des Übertragungsmodus vom Senden auf Empfangen oder umgekehrt zu jedem Zeitpunkt einer Arbitrierungsphase der Übertragung ohne Unterbrechung möglich ist. Wenn beispielsweise die Instruktionen derart in den ersten und zweiten Adressbereichen abgelegt sind, daß sich die Adressen äquivalenter Instruktionen nur in einer Gruppe von Bits oder nur in einem Bit unterscheiden, beispielsweise dem höchstwertigen Bit, kann von einem Sendevorgang durch einfaches Invertieren dieses Bits in einen Empfangsvorgang umgeschaltet werden. Dies ist dann besonders vorteilhaft, wenn ein Sendevorgang begonnen wurde, eine Busarbitrierung jedoch ergibt, daß keine Sendeberechtigung vorliegt, sondern vielmehr ein anderer Busteilnehmer die Sendeberechtigung besitzt und ausübt. Dieses erfindungsgemäße Verfahren kann auch als Schattenprogramm-Ablauf betrachtet werden, da bei jedem Ablauf eines Sendeprogrammes das zugehörige Empfangsprogramm als Schattenprogramm hinterlegt ist, um bei entsprechender negativer Busarbitrierung ohne Umschaltverzögerung in den Vordergrund zu treten und abzulaufen. Dies erlaubt vorteilhafterweise den Übergang vom Senden zum Empfangen ohne Interruptmechanismen und den damit verbundenen Zeitverlusten und ohne aufwendige Softwarekomponenten.

Für die der vorliegenden Erfindung zugrundeliegende Aufgabe ist die Verwendung einer hierarchischen Prozessorarchitektur vorteilhaft.

Dabei ist es vorteilhaft, daß durch die Verwendung einer hierarchischen Prozessorarchitektur mit verschiedenen Prozessorebenen die Aufteilung der Steuerungsaufgaben auf die verschiedenen Prozessorebenen und damit eine Spezialisierung der einzelnen Prozessorebenen auf die übertragenen Teilaufgaben ermöglicht wird. Damit wird durch die Verwendung einer hierarchischen Prozessorarchitektur ein hohes Maß an Verarbeitungsgeschwindigkeit und Protokollflexibilität bei gleichzeitiger Realisierung durch eine zuverlässige und kostengünstige Schaltungstechnik erzielt. Beispielsweise wird durch die Verwendung einer ersten Prozessorebene für die Bearbeitung der Binärzeichen und einer zweiten Prozessorebene für die Bearbeitung der Datenworte eine Gliederung der Steuerungsaufgaben erzielt, die neben einer großen Flexibilität für zukünftige Busprotokolle auch eine hohe Zuverlässigkeit der Steuerungsvorrichtung bietet. Weiterhin ist vorteilhaft, daß die hierarchische Prozessorarchitektur und die Verteilung der Steuerungsaufgaben auf verschiedenen-Prozessorebenen eine zeit- und kostengünstige Anpassung an neue Datenbustypen und die zugehörigen Datenbusprotokolle erlaubt, insbesondere ohne Erweiterung oder Veränderung schaltungstechnischer Einzelfunktionen.

### Figurenbeschreibung

Ein Ausführungsbeispiel der Erfindung ist in den Zeichnungen dargestellt und wird nachfolgend näher beschrieben.

Es zeigen:
- Figur 1: Ein grobstrukturiertes Blockschaltbild der Vorrichtung zur Steuerung eines Datenbusses;
- Figur 2: Ein mittelstrukturiertes Blockschaltbild einer Ausführungsform der Vorrichtung zur Steuerung eines Datenbusses;
- Figur 3: Ein feinstrukturiertes Schaltbild einer Ausführungsform der Vorrichtung zur Steuerung eines Datenbusses mit Signalpfaden;
- Figur 4: Ein Blockschaltbild einer integrierten Lösung für die Vorrichtung zur Steuerung eines von mehreren Datenbussen; und
- Figur 5: Eine zentrale Funktionsplattform für die Steuerung verschiedener Funktionen in einem Kraftfahrzeug.

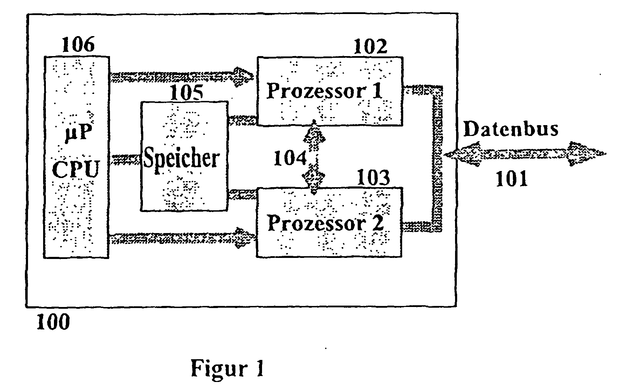

Das in der Figur 1 dargestellte grobsturkturierte Blockschaltbild der Vorrichtung 100 zur Steuerung eines Datenbusses 101 zeigt eine hierarchische Prozessorarchitektur mit einer ersten Prozessorebene 102 und einer zweiten Prozessorebene 103, welche über den Signalpfad 104 Daten austauschen. Dieser Datenaustauscht beinhaltet insbesondere die Übermittlung der seriellen Daten, der Takt- und Steuersignale. Beide Prozessorebenen arbeiten für die Ausführung der Steuerfunktionen mit Daten aus einem Speicher 105. Weiterhin ist ein Mikroprozessor oder Mikrocontroller 106 dargestellt, der ebenfalls mit Daten aus dem Speicher 105 arbeitet und der den Ablauf der Datenbussteuerung kontrolliert.

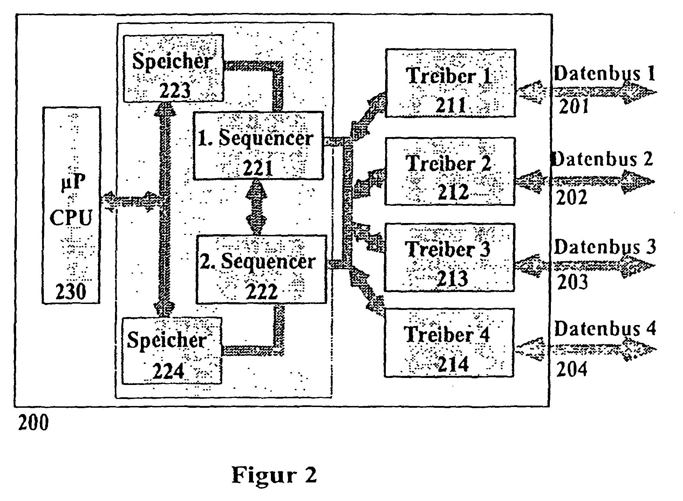

Das in der Figur 2 dargestellte mittelstrukturierte Blockschaltbild einer Ausführungsform der Vorrichtung 200 zur Steuerung eines Datenbusses zeigt eine Reihe von steuerbaren Datenbussen 201, 202, 203 und 204, die über jeweils einen Treiber 211, 212, 213 und 214 mit den beiden Sequenzern 221 und 222 verbunden sind. Der Sequenzer 221 arbeitet mit Daten aus dem Speicher 223 und der Sequenzer 222 arbeitet mit Daten aus dem Speicher 224. Beide Sequenzer stehen in Verbindung mit einem Mikroprozessor oder Mikrocontroller 230.

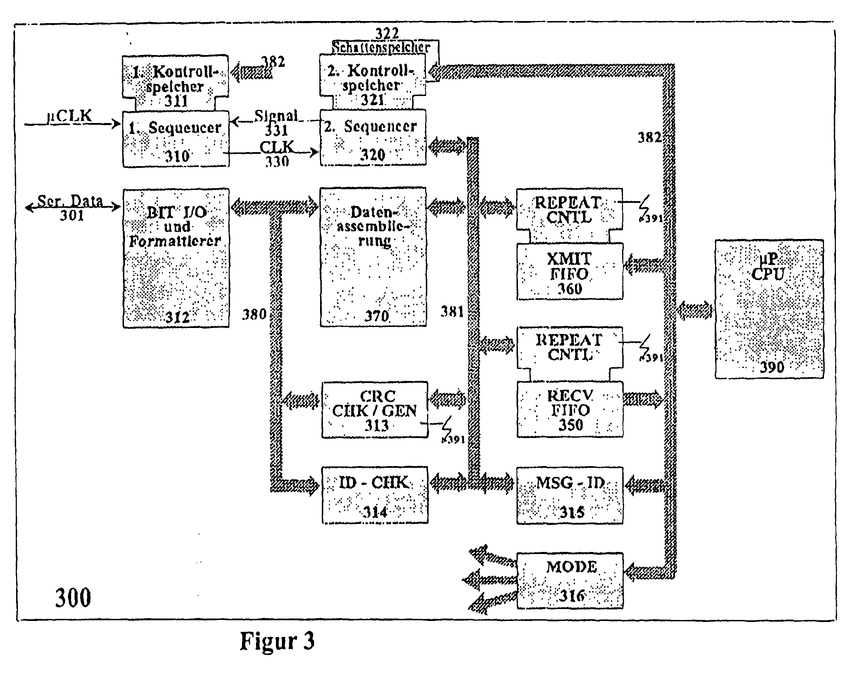

Das in Figur 3 dargestellte feinstrukturierte Schaltbild einer Ausführungsform der Vorrichtung 300 zur Steuerung eines Datenbusses mit Signalpfaden zeigt den modularen Aufbau der Steuervorrichtung. Erfindungsgemäß wird die Verarbeitung der Signale des Datenbusses 301 durch die hierarchische Prozessorarchitektur in zwei Teilbereiche oder Prozessorebenen aufgetrennt. Die jeweilige Prozessorebene weist eine freiprogrammierbare Ablaufsteuerung, einen Sequenzer, auf, welcher die diesem Teilbereich zugewiesenen Aufgaben entsprechend dem jeweiligen Datenbusprotokoll abarbeitet.

Der erste Teilbereich umfaßt die Binärzeichen- oder Bitanalyse, die Bitübertragung, die Takt-Synchronisation sowie die Formattierung der Bits durch eine Übertragungs- und Formattierungseinheit 312. Dieser erste Teilbereich wird von einem ersten Sequenzer 310 gesteuert und abgearbeitet. Der erste Sequenzer 310 arbeitet dabei mit Daten aus einem ersten Kontrollspeicher 311, der eine RAM Architektur aufweist. Die Aufbereitung der übertragenen Datenworte erfolgt in einer Datenassemblierungs-Einheit 370.

Der zweite Teilbereich umfaßt das Empfangen und Senden der Datenworte mit den zugehörigen Prüfmechanismen; dieser zweite Teilbereich wird durch einen zweiten Sequenzer 320 gesteuert und abgearbeitet. Der zweite Sequenzer 320 arbeitet dabei mit Daten aus einem zweiten Kontrollspeicher 321, der eine RAM Architektur aufweist. Die in dem ersten Kontrollspeicher 311 und zweiten Kontrollspeicher 321 abgelegten Programme repräsentieren die erforderlichen Protokollmechanismen des zu steuernden Datenbusses 301. Bestimmte Funktionen, wie Formatieren der Binärzeichen zu Datenworten 312, Zyklisches Blockprüfungsverfahren (CRC CHK/GEN) 313 oder Bit-Stuffing, werden bei Bedarf aktiviert. Der erste Sequenzer 310 und der zweite Sequenzer kommunizieren über eine Taktleitung (CLK) 330 und eine Signalleitung 331 miteinander.

Die Dateneingabe erfolgt durch einen Empfangsspeicher (RECV FIFO) 350 mit FIFO-Architektur und die Datenausgabe erfolgt über einen Sendespeicher (XMIT FIFO) 360 mit FIFO-Architektur. Solange die zu übertragende Datenmenge die freie Kapazität der beiden FIFO-Speicher 350 und 360 nicht überschritten hat, kann der Programmablauf automatisch wiederholt werden, falls die Datenübertragung als fehlerhaft erkannt wurde (AUTO REPEAT-Funktion). Dies wird durch entsprechende Kontrollfunktionen (REPEAT CNTL) 351 und 361 gesteuert, die jeweils bei den beiden FIFO-Speichern 350 und 360 lokalisiert sind.

Weiterhin werden beim Senden die Daten auch mitgelesen und parallel zum Sendevorgang in den Empfangsspeicher 350 eingeschrieben. Bei Übertragungsproblemen ist somit eine Fehleranalyse durch den Mikroprozessor oder Mikrocontroller möglich (MONITOR-Funktion).

Eine Identifikationsbitfolge-Einheit (ID-CHK) 314 prüft, ob eine Bitfolge auf dem Datenbus auftritt, die mit einem der im Nachrichten-Identifikationsregister abgespeicherten Werte (MSG-ID) 315 übereinstimmt. Durch ein Maskier-Register (Exemt Mask Register) können bei einem Vergleichswert sowie durch ein allgemeines Maskier-Register (Global Mask Register) bei allen anderen Vergleichswerten einzelne Bits von der Prüfung ausgeschlossen werden. Gegebenenfalls wird dann diese Bitfolge sowie alle weiteren Bits bis zum Ende der Nachricht im Empfangsspeicher (RECV FIFO) 350 festgehalten. Weiterhin weist die Vorrichtung 300 ein Zustands-Kontrollregister (Mode) 316 auf.

Die Bitein-/ausgabe- und Formattierungseinheit 312, die Datenassemblierungseinheit 370, die Blockprüfungseinheit 313 und die Identifikationsbitfolge-Einheit (ID-CHK) 314 sind miteinander über eine erste Busverbindung 380 miteinander verbunden. Weiterhin sind der zweite Sequenzer 320, die Datenassemblierungseinheit 370, die Blockprüfungseinheit 313, die Identifikationsbitfolge-Einheit (ID-CHK) 314, das Nachrichten-Identifikationsregister (MSG-ID) 315 sowie die Kontrollfunktionen 351 und 361 der Sende- und Empfangsspeicher 350 und 360 über eine zweite Busverbindung 381 miteinander verbunden. Weiterhin werden die beiden Kontrollspeicher 311 und 321 der beiden Sequenzer 310 und 320, die Sende- und Empfangsspeicher 350 und 360, das Nachrichten-Identifikationsregister (MSG-ID) 315 sowie das Moden-Kontrollregister (MODE) 316 über eine dritte Busverbindung 382 miteinander verbunden, die gleichzeitig die Schnittstelle zu der zentralen Recheneinheit 390 des Mikroprozesssors oder Mikrocontrollers darstellt. Die Blockprüfungseinheit 313 und die Kontrollfunktionen 351 und 361 besitzen einen Interruptausgang 391, der von der zentralen Recheneinheit 390 des Mikroprozesssors oder Mikrocontrollers empfangen werden kann.

Die in den Figuren 1, 2 und 3 dargestellten Funktionsblöcke sind folgendermaßen äquivalent:

| Bezeichnung | Figur 1 | Figur 2 | Figur 3 |
|---|---|---|---|
| Vorrichtung | 100 | 200 | 300 |
| Datenbus | 101 | 201 bis 204 | 301 |
| 1. Prozessorebene | 102 | 221 | 310 |
| 2. Prozessorebene | 103 | 222 | 320 |
| Datenaustausch | 104 | 222 | 330/331 |
| Speicher | 105 | 223/224 | 311/321 |
| Mikroprozessor/CPU | 106 | 230 | 390 |

Der Instruktionssatz des zweiten Sequenzers ist derart konzipiert, daß es für die Sendebefehle, die bis zum Ablauf einer Arbitrierungsphase abgearbeitet werden, einen äquivalenten Empfangsbefehl gibt. Die hardware-Kontrollfunktionen des Empfangsbefehls sind dabei eine Untermenge der hardware-Kontrollfunktionen des zugehörigen Sendebefehls. Durch die Gewährleistung eines entsprechenden Zeitverhaltens bei der Abarbeitung der Sende- und Empfangsbefehle wird erreicht, daß während der Arbitrierungsphase, in der entschieden wird, ob die Steuerung auf den Bus Zugriff nehmen darf oder nicht, ohne Unterbrechung vom Sendemodus auf den Empfangsmodus umgeschaltet werden kann. Im Programmspeicher 321 des zweiten Sequenzers 320 befindet sich zum Einen das zum jeweiligen Datenbusprotokoll gehörige Sendeprogramm. Zum Anderen befindet sich in diesem Programmspeicher als Schattenspeicher 322 mit RAM-Architektur das entsprechende Empfangsprogramm, und zwar in einen durch die hardware vorgegebenen Adressoffset höheren Adreßbereich. Geht während der Arbitrierungsphase die Buskontrolle verloren (Verlust der Arbitrierung), wird zur nächsten Instruktionsadresse der Adressoffset hinzuaddiert und an die entsprechende Adresse der Empfangsinstruktion des Empfangsprogrammes im Schattenspeicher 322 gesprungen und das Empfangsprogramm löst nahtlos und unterbrechungsfrei das Sendeprogramm ab, wobei die bisher empfangenen Daten aus dem Empfangsspeicher 350 nun Gültigkeit erlangen.

Tritt ein Fehler während der Arbitrierungsphase auf, wird dieser als Verlust der Arbitrierung interpretiert, ein Latch-Zwischenspeicher wird gesetzt und dieser steuert die höchstwertige Adressleitung des Programmspeichers 321 des zweiten Sequenzers 320 auf Sprung in den Schattenspeicher 322. Damit springt die Instruktionsabfolge direkt an die entsprechende Stelle des Empfangsprogrammes und es wird das Empfangsprogramm weiter fortgesetzt. Die bereits empfangenen Daten werden als Bestandteil der Identifikations-Bitfolge interpretiert und auf Übereinstimmung mit den Identifikations-Bitfolgen des Identifikations-Registers 314 überprüft. Weiterhin werden die Adresszeiger des Sendespeichers 360 zurückgesetzt. Nach Beendigung des Datenverkehrs kann ein erneuter Sendeversuch unternommen werden.

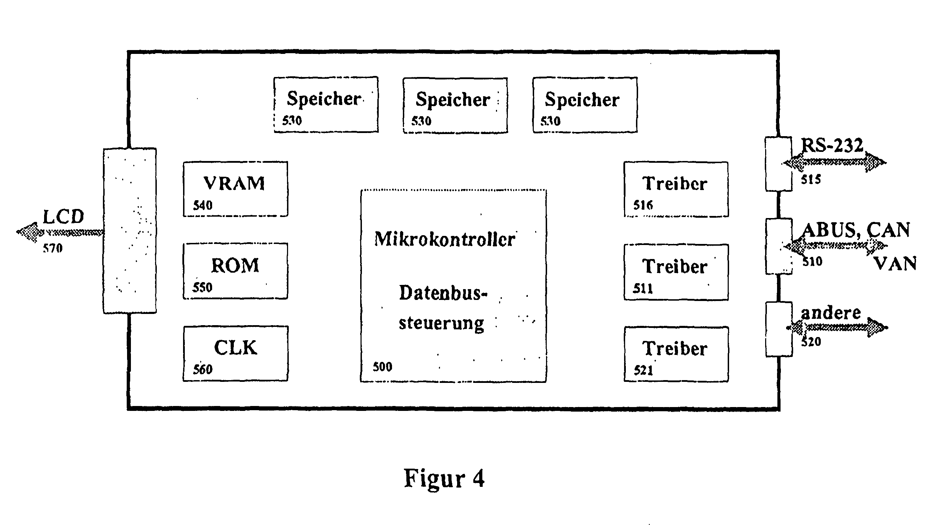

Das in der Figur 4 dargestellte Blockschaltbild einer integrierten Lösung für die Vorrichtung zur Steuerung eines von mehreren Datenbussen zeigt eine Integration 500 von einem PowerPC Mikrocontroller und der Vorrichtung zur Steuerung eines Datenbusses. Neben verschiedenen automotiven Feldbussen (ABUS, CAN, VAN) 510, die dieser integrierte Baustein 500 über einen entsprechenden Bustreiber 511 steuert, kann dieser integrierte Baustein 500 auch noch einen Datenbus vom Typ RS-232 515 über einen Treiber 516 steuern und einen weiteren Datenbus 520 über einen Treiber 521 steuern. Hierzu arbeitet der integrierte Baustein 500 mit Daten aus Programm- und Datenspeichern 530. Über einen Videospeicher (VRAM) 540 steuert der integrierte Baustein 500 eine Flüssigkristall-Anzeigeeinheit 570. Der gesamte Aufbau wird durch die zentrale Funktion eines Nur-Lese-Speichers (ROM) 550 und einer Takteinheit (CLK) 560 unterstützt.

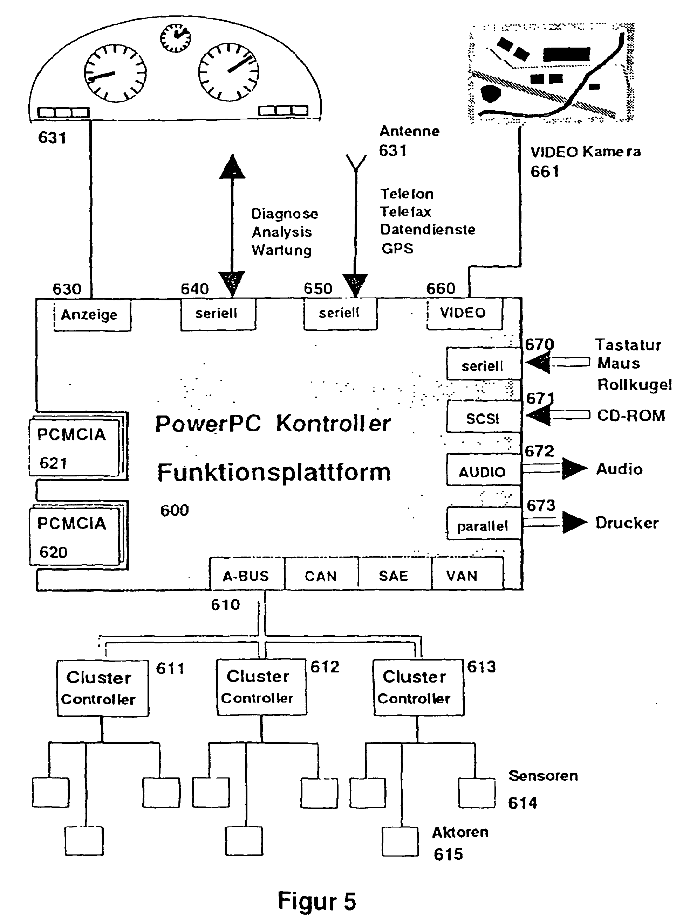

Die in der Figur 5 dargestellte Funktionsplattform 600 für die zentrale Steuerung verschiedener Funktionen in einem Kraftfahrzeug mittels eines PowerPC Kontrollers zeigt die Steuerungsmöglichkeit eines A-Bus Datenbusses 610, der wiederum mehrere Cluster-Controller 611, 612 und 613 aufweist, an welche die Sensoren 614 und die Aktoren 615 angeschlossen sind. Neben der Möglichkeit weitere automotive Feldbusse zu steuern, besitzt die Funktionsplattform 600 eine erste PCMCIA (Personnel Computer Memory Card International Association) Schnittstelle 620 für die Verbindung zu Speichermedien, wie beispielsweise FLASH-Speicherkarten oder magnetischen Speicherplatten. Diese Speichermedien können beispielsweise benutzer- oder fahrzeugspezifische Daten enthalten oder auch eine Benutzeridentifikation oder Zugangsberechtigung. Weiterhin besitzt die Funktionsplattform 600 eine zweite PCMCIA (Personnel Computer Memory Card International Association) Schnittstelle 621 für die Verbindung zu neuen Anwendungsprogrammen oder zur Datenkommunikation.

Weiterhin weist die Funktionsplattform 600 einen Anzeigeausgang 630 auf, der eine Instrumententafel 631 steuert. Eine weitere Schnittstelle 640 erlaubt die Kraftfahrzeug-Diagnose und gegebenfalls eine Fehleranalyse sowie den Datenaustausch anläßlich von Wartungsarbeiten am Kraftfahrzeug. Weiterhin können über eine Schnittstelle 650 mit angeschlossener Antenne 651 Datendienste drahtlos genutzt werden, beispielsweise Telefon, Telefax oder die Positionsbestimmung mittels GPS. Über eine entsprechende Schnittstelle 660 mit angeschlossener Videokamera 661 können fahrtstreckenspezifische Informationen erfaßt und berücksichtigt werden.

Weiterhin besitzt die Funktionsplattform 600 eine serielle Schnittstelle 670 für den Anschluß von Eingabemedien wie beispielsweise eine Tastatur, eine Maus oder eine Rollkugel, eine Schnittstelle 671 vom Typ SCSI für den Anschluß von Massenspeichermedien wie beispielsweise einer CD-ROM oder eines Magnetbandes, eine AUDIO-Schnittstelle 672 beispielsweise für die Befehlseingabe oder Informationsausgabe durch Sprache und eine parallele Schnittstelle 673 für die Informationsausgabe beispielsweise durch einen Drucker.

## Patentansprüche

1. Eine Vorrichtung (100) zur Steuerung eines Datenbusses (101), der zur Übertragung von Informationen in Form von Binärzeichen vorgesehen ist, wobei die Vorrichtung mindestens einen Prozessor (106) enthält,
**dadurch gekennzeichnet, dass**
die Vorrichtung (100) zur Steuerung des Datenbusses (101) eine hierarchische Prozessorarchitektur mit mindestens zwei Prozessorebenen (102, 103) aufweist,
jede der mindestens zwei Prozessorebenen (102, 103) für Teilaufgaben der Steuerung des Datenbusses (101) vorgesehen ist, und
zwischen den mindestens zwei Prozessorebenen (102, 103) ein Datenfluß (104) stattfinden kann.

2. Die Vorrichtung (100) zur Steuerung eines Datenbusses nach Anspruch 1, wobei die erste und die zweite Prozessorebene mit einer Speichereinheit (105) verbunden sind, auf die ein Prozessor (106) eines Datenverarbeitungssystems zugreifen kann.

3. Die Vorrichtung (100) zur Steuerung eines Datenbusses nach einem der Ansprüche 1 bis 2, wobei
eine erste Prozessorebene (102) der mindestens zwei Prozessorebenen (102, 103) eine erste programmierbare Ablaufsteuerung (221) aufweist, und
die erste programmierbare Ablaufsteuerung (221) Mittel zur Verarbeitung der auf dem Datenbus (101) übertragenen Binärzeichen aufweist, und wobei
eine zweite, übergeordnete Prozessorebene (103) der mindestens zwei Prozessorebenen (102, 103) eine zweite programmierbare Ablaufsteuerung (222) aufweist, und
die zweite programmierbare Ablaufsteuerung (222) Mittel zur Verarbeitung von Datenworten aufweist, wobei
die Datenworte sich aus einer Anzahl der auf dem Datenbus (101) übertragenen Binärzeichen zusammensetzen.

4. Die Vorrichtung (100) zur Steuerung eines Datenbusses (101) nach Anspruch 3, wobei
der Datenbus (101) ein erstes Taktsignal aufweist, und
die Vorrichtung (100) zur Steuerung des Datenbusses (101) ein zweites Taktsignal aufweist, und wobei
die erste programmierbare Ablaufsteuerung (221) Mittel zur Synchronisation des zweiten Taktsignals auf das erste Taktsignal aufweist.

5. Die Vorrichtung (300) zur Steuerung eines Datenbusses (301) nach einem der Ansprüche 3 bis 4, wobei
die erste programmierbare Ablaufsteuerung (310) Mittel zur Filterung (312) der auf dem Datenbus (301) übertragenen Binärzeichen aufweist.

6. Die Vorrichtung (300) zur Steuerung eines Datenbusses (301) nach einem der Ansprüche 4 bis 5, wobei
die erste programmierbare Ablaufsteuerung (310) Mittel zur Bereitstellung eines dritten Taktsignals (331) für die zweite programmierbare Ablaufsteuerung (320) aufweist.

7. Die Vorrichtung (300) zur Steuerung eines Datenbusses (301) nach einem der Ansprüche 3 bis 6, wobei
die zweite programmierbare Ablaufsteuerung (320) Mittel zur Ausführung eines Sende-/Empfangs-Protokolles des Datenbusses (301) aufweist.

8. Die Vorrichtung (300) zur Steuerung eines Datenbusses (301) nach einem der Ansprüche 3 bis 7, wobei
die zweite programmierbare Ablaufsteuerung (320) Mittel zur Entscheidung über eine Zugriffsberechtigung und Adresserkennung für den Datenbus (301) aufweist.

9. Die Vorrichtung (300) zur Steuerung eines Datenbusses (301) nach einem der Ansprüche 3 bis 8, wobei
die zweite programmierbare Ablaufsteuerung (320) Mittel zur Fehlererkennung (313) der auf dem Datenbus (301) übertragenen Binärzeichen aufweist.

10. Die Vorrichtung (300) zur Steuerung eines Datenbusses (301) nach einem der Ansprüche 1 bis 9, wobei die Vorrichtung (300) weiterhin aufweist:
einen Empfangspeicher (350) für die über den Datenbus (301) zu empfangenden Daten, und
einen Sendespeicher (360) für die über den Datenbus (301) zu sendenden Daten,
wobei der Empfangsspeicher (350) und der Sendespeicher (360) vorzugsweise als FIFO-Speicher ausgeführt sind.

11. Die Vorrichtung (300) zur Steuerung eines Datenbusses (301) nach einem der Ansprüche 1 bis 10, wobei die Vorrichtung (300) weiterhin aufweist:
Mittel (312) zur Bearbeitung des Datenformates der auf dem Datenbus (301) übertragenen Binärzeichen,
Register (315) zum Abspeichern von Identifikationsbitfolgen, bei deren Auftreten auf dem Datenbus (301) die Vorrichtung (300) zur Steuerung des Datenbusses (301) aktiv wird, und
Statusregister und Kontrollregister (316), deren Inhalte den Betriebszustand der Vorrichtung (300) zur Steuerung des Datenbusses (301) wiedergeben.

12. Die Vorrichtung (300) zur Steuerung eines Datenbusses (301) nach Anspruch 11, wobei
die Größe der Register (315) zum Abspeichern von Identifikationsbitfolgen eingestellt werden kann.

13. Die Vorrichtung (300) zur Steuerung eines Datenbusses (301) nach einem der Ansprüche 1 bis 12, wobei
der Datenbus (301) ein Übertragungskanal ist, auf dem die Binärzeichen seriell übertragen werden, insbesondere ein Feldbus für allgemeine industrielle Anwendungen oder ein Feldbus für den Einsatz im Kraftfahrzeug.

14. Die Vorrichtung (300) zur Steuerung eines Datenbusses (301) nach einem der Ansprüche 1 bis 13, wobei
die Vorrichtung (300) zur Steuerung des Datenbusses (301) in den Funktionsumfang eines PowerPC Mikrocontrollers (500) integriert ist, und der PowerPC Mikrocontroller Bestandteil einer zentralen Funktionsplattform (600) ist.

15. Ein Verfahren zur Steuerung eines Datenbusses (101), der zur Übertragung von Informationen in Form von Binärzeichen vorgesehen ist, mit folgenden Verfahrensschritten
Verarbeiten der Binärzeichen in einer ersten Prozessorebene (102) von mindestens zwei Prozessorebenen (102, 103), und
Verarbeiten von Datenworten in einer zweiten, übergeordneten Prozessorebene (103) der mindestens zwei Prozessorebenen (102, 103), wobei die Datenworte sich aus einer Anzahl der Binärzeichen zusammensetzen.

16. Das Verfahren zur Steuerung eines Datenbusses (101) nach Anspruch 15, wobei
in der ersten Prozessorebene (102) eine erste programmierbare Ablaufsteuerung (221) folgende Verfahrensschritte aufweist:
Synchronisieren eines ersten Taktsignales des Datenbusses (101) mit einem zweiten Taktsignal für die Steuerung des Datenbusses,
Generieren eines dritten Taktsignales für die zweite Prozessorebene (103), die eine zweite programmierbare Ablaufsteuerung aufweist (222),
Detektieren eines Bitfensters innerhalb der auf dem Datenbus (101) übertragenen Daten, und wobei
in der zweiten Prozessorebene (103) die zweite programmierbare Ablaufsteuerung (222) folgende Verfahrensschritte aufweist:
Festlegen der Größe einer Identifikationsbitfolge, bei deren Auftreten auf dem Datenbus (101) das Verfahren zur Steuerung des Datenbusses aktiv wird,
Festlegen der Zahl der Binärzeichen je Datenwort, des Datenformates und der Übertragungsgeschwindigkeit der Daten auf dem Datenbus (101),
Senden und Empfangen von Kontrollsignalen, und
Prüfen der empfangenen Daten mittels eines zyklischen Blockprüfungsverfahrens.

17. Das Verfahren zur Steuerung eines Datenbusses nach Anspruch 15 oder 16, wobei das Verfahren Instruktionen für das Senden und Instruktionen für das Empfangen von Daten verwendet und folgende Verfahrensschritte aufweist:
Abspeichern der Instruktionen für das Senden von Daten in einem ersten Adressbereich (321), und
Abspeichern der Instruktionen für das Empfangen von Daten in einem zweiten Adressbereich (322), wobei
weitgehend äquivalente Instruktionen für das Empfangen und Senden von Daten abgespeichert werden,
die äquivalenten Instruktionen für das Senden und für das Empfangen von Daten an Adressen in dem ersten (321) und zweiten (322) Adressbereich abgespeichert sind, die sich um einen Adressoffset unterscheiden, insbesondere die sich um das höchstwertige Bit der Adresse unterscheiden, und
Springen von einer Instruktion für das Senden von Daten von einer Stelle des ersten Adressbereiches (321) an die äquivalente Instruktion für das Empfangen von Daten in dem zweiten Adressbereich (322) durch Addition des Adressoffsets.

## Claims

1. An apparatus (100) for the control system of a data bus (101), which is intended for the transmission of information in form of binary digits, whereby the apparatus contains at least a processor (106),
**characterized in that**
the apparatus (100) for the control system of data bus (101) exhibits a hierarchical processor architecture with at least two processor levels (102, 103),
each of the at least two processor levels (102, 103) is intended for subtasks of the control system of the data bus (101), and
data flow (104) can occur between the at least two processor levels (102, 103).

2. The apparatus (100) for the control system of a data bus according to Claim 1, whereby the primary and secondary processor levels are connected with a memory unit (105), to which one processor (106) can have access to.

3. The apparatus (100) for the control system of a data bus according to Claims 1 and 2, whereby
a primary processor level (102) of at least two processor levels (102, 103) exhibits a programmable sequence control (221), and
the first programmable sequence control (221) exhibits means for processing the binary digits transmitted on the data bus (101), and whereby
a secondary, superior processor level (103) of at least two processor levels (102, 103) exhibits a second programmable sequence control (222), and
the second programmable sequence control (222) exhibits means for processing data words, whereby
the data words comprise a number of binary digits transmitted on the data bus (101).

4. The apparatus (100) for the control system of a data bus (101) according to Claim 3, whereby the data bus (101) exhibits a first timing signal, and the apparatus (100) for the control system of data bus (101) exhibits a second timing signal, and whereby
the first programmable sequence control (221) exhibits means for synchronization of the second timing signal with the first timing signal.

5. The apparatus (300) for the control system of a data bus according to Claims 3 up to 4, whereby
the first programmable sequence control (310) exhibits means for filtering (312) of the binary digit transmitted on the data bus (301).

6. The apparatus (300) for the control system of a data bus according to Claims 4 up to 5, whereby
the first programmable sequence control (310) exhibits means for providing a third timing signal (331) for the second programmable sequence control (320).

7. The apparatus (300) for the control system of a data bus (301) according to one of the Claims 3 up to 6, whereby
the second programmable sequence control (320) exhibits means for executing a transmit/receive protocol of the data bus (301).

8. The apparatus (300) for the control system of a data bus according to Claims 3 up to 7, whereby
the second programmable sequence control (320) exhibits means for making decisions about access authorization and address recognition for the data bus (301).

9. The apparatus (300) for the control system of a data bus according to Claims 3 up to 6, whereby
the first programmable sequence control (320) exhibits means for error detection (313) of the binary digits transmitted on the data bus (301).

10. The apparatus (300) for the control system of a data bus according to Claims 1 up to 9, whereby the apparatus (300) furthermore exhibits:
a reception memory (350) for the data to be received via the data bus (301), and a transmission memory (360) for the data to be transmitted via the data bus (301),
whereby the reception memory (350) and the transmission memory (360) are implemented preferentially as a FIFO memory.

11. The apparatus (300) for the control system of a data bus (301) according to one of the Claims 1 up to 10, whereby the apparatus (300) further exhibits:
means (312) for processing the data format of the binary digits transmitted on the data bus (301), register (315) for saving identification bit sequence, by which occurrence on the data bus (301) of the apparatus (300) the control system of the data bus (301) becomes active, and the status register and control register (316), whose contents represent the operating state of the apparatus (300) for the control system of data bus (301).

12. The apparatus (300) for the control system of a data bus (301) according to Claim 11, whereby the size of the register (315) can be set for saving the identification bit sequences.

13. The apparatus (300) for the control system of a data bus according to Claims 1 up to 12, whereby
the data bus (301) is a transmitting channel, on which the binary digits are serially transmitted, especially a field bus for general industrial application or a field bus for the application in an automotive vehicle.

14. The apparatus (300) for the control system of a data bus (301) according to one of the Claims 1 up to 13, whereby
the apparatus (300) for the control system of the data bus (301) is integrated into the functional scope of a PowerPC micro controller (500, and the PowerPC micro controller is part of a central function platform (600).

15. A method for controlling a data bus (101), which is intended for the transmission of information in form of binary digits, with the following process steps:
processing binary digits in one of the first processor levels (102) of at least two processor levels (102, 103), and
processing of data words in a second, superior processor level (103) that consists of at least two processor levels (102, 103), whereby the data words comprise a number of binary digits.

16. A method for controlling a data bus (101) according to Claim 15, whereby
the first processor level (102) of a first programmable sequence control (221) exhibits the following process steps:
synchronizing a first timing signal of the data bus (101) with a second timing signal for the control system of the data bus,
generating a third timing signal for the second processor level (103) which exhibits a second programmable sequence control (222),
the detection of a bit window within data transmitted on the data bus (101), and whereby
the second processor level (103) the second programmable sequence control (222) exhibits the following process steps:
determining the size of an identification bit sequence, which upon occurrence activates the process for the control system of the data bus (101),
determining the number of the binary digits per data word of the data format and the transmission speed of the data on the data bus (101),
transmitting and receiving control signals and checking the received data by means of a cyclical block checking process.

17. A method for controlling a data bus according to Claim 15 or 16, whereby the process uses instructions for transmitting and receiving data and exhibits the following process steps:
saving the instructions for transmitting data in a first address area (321), and
saving the instructions for receiving data in a second address area (322), and
generally equivalent instructions for received and transmitted data are saved, equivalent instructions for transmitting and receiving data on addresses in the first (321) and second (322) address area are saved, which differ by an address offset, especially those which differ by the highest ranking bit of the address, and
jumping from one instruction for transmitting data on one point of the first address area (321) to the equivalent instruction for receiving data in the second address area (322) by addition of the address offset.

## Revendications

1. Un dispositif (100), pour commander un bus de données (101) prévu pour la transmission d'informations ayant la forme de caractères binaires, le dispositif contenant au moins un processeur (106),
**caractérisé en ce que**
le dispositif (100) pour la commande du bus de données (101) présente une architecture de processeur hiérarchique, ayant au moins deux plans de processeur (102, 103),
chacun des au moins deux plans de processeur (102, 103) étant prévu pour des tâches partielles de la commande du bus de données (101), et
entre les au moins deux plans de processeur (102, 103) peut s'effectuer un flux de données (104).

2. Le dispositif (100) pour la commande d'un flux de données selon la revendication 1, le premier et le deuxième plans de processeur étant reliés à une unité de mémoire (105), à laquelle un processeur (106) d'un système de traitement de données peut avoir accès.

3. Le dispositif (100) pour la commande d'un bus de données selon l'une des revendications 1 ou 2, où
un premier plan de processeur (102) des au moins deux plans de processeur (102, 103) présente une commande de déroulement (221) programmable, et
la première commande de déroulement (221) programmable présente des moyens pour le traitement des caractères binaires transmis au bus de données (101), et où
un deuxième plan de processeur (103), hiérarchiquement supérieur, des au moins deux plans de processeur (102, 103) présente une deuxième commande de déroulement (222) programmable, et
la deuxième commande de déroulement (222) programmable présente des moyens pour le traitement de mots de données, où
les mots de données se composent d'une pluralité des caractères binaires transmis sur le bus de données (101).

4. Le dispositif (100) pour la commande d'un bus de données (101) selon la revendication 3, où
le bus de données (101) présente un premier signal de cadencement, et
le dispositif (100) présente, pour la commande du bus de données (101), un deuxième signal de cadencement, et où
la première commande de déroulement (221) programmable présente des moyens, pour la synchronisation du deuxième signal de cadencement sur le premier signal de cadencement.

5. Le dispositif (300) pour la commande d'un bus de données (301) selon l'une des revendications 3 à 4, où
la première commande de déroulement (310) programmable présente des moyens pour le filtrage (312) des caractères binaires transmis sur le bus de données (301).

6. Le dispositif (300) pour la commande d'un bus de données (301) selon l'une des revendications 4 à 5, où
la première commande de déroulement (310) programmable présente des moyens pour la fourniture d'un troisième signal de cadencement (331), pour la deuxième commande de déroulement (320) programmable.

7. Le dispositif (300) pour la commande d'un bus de données (301) selon l'une des revendications 3 à 6, où
la deuxième commande de déroulement (320) programmable présente des moyens pour l'exécution d'un protocole d'émission/réception du bus de données (301).

8. Le dispositif (300) pour la commande d'un bus de données (301) selon l'une des revendications 3 à 7, où
la deuxième commande de déroulement (320) programmable présente des moyens pour la décision au sujet d'une autorisation d'accès et d'une identification d'adresse pour le bus de données (301).

9. Le dispositif (300) pour la commande d'un bus de données (301) selon l'une des revendications 3 à 8, où
la deuxième commande de déroulement (320) programmable présente des moyens pour l'identification d'erreurs (313) des caractères binaires transmis sur le bus de données (301).

10. Le dispositif (300) pour la commande d'un bus de données (301) selon l'une des revendications 1 à 9, le dispositif (300) présentant en outre :
une mémoire de réception (350), pour les données reçues par l'intermédiaire du bus de données (301), et
une mémoire d'émission (360), pour les données à envoyer sur le bus de données (301),
la mémoire de réception (350) et la mémoire d'émission (360) étant de préférence réalisées sous la forme de mémoires FIFO.

11. Le dispositif (300) pour la commande d'un bus de données (301) selon l'une des revendications 1 à 10, le dispositif (300) présentant en outre :
des moyens (312), pour le traitement du format de données des caractères binaires transmis sur le bus de données (301),
des registres (315), pour le stockage de succession de bits d'identification, lors de la survenance desquels, sur le bus de données (301), le dispositif (300) pour la commande du bus de données (301) est actif, et
des registres d'état et des registres de contrôle (316), dont les contenus reproduisent l'état de fonctionnement du dispositif (300) pour la commande du bus de données (301).

12. Le dispositif (300) pour la commande d'un bus de données (301) selon la revendication 11, où
la taille du registre (315), pour le stockage des successions de bits d'identification, peut être réglée.

13. Le dispositif (300) pour la commande d'un bus de données (301) selon l'une des revendications 1 à 12, où
le bus de données (301) est un canal de transmission, sur lequel les caractères binaires sont transmis de façon sérielle, en particulier un bus de terrain pour des applications industrielles générales ou un bus de terrain pour l'utilisation dans un véhicule automobile.

14. Le dispositif (300) pour la commande d'un bus de données (301) selon l'une des revendications 1 à 13, où
le dispositif (300) pour la commande du bus de données (301) est intégré dans l'étendue fonctionnelle d'un microcontrôleur PowerPC (500), et le microcontrôleur PowerPC fait partie d'une plateforme fonctionnelle (600) centrale.

15. Un procédé de commande d'un bus de données (101), prévu pour la transmission d'informations ayant la forme de caractères binaires, avec les étapes de procédé suivantes :
traitement des caractères binaires dans un premier plan de processeur (102), parmi au moins deux plans de processeur (102, 103), et
traitement de mots de données dans un deuxième plan de processeur (103), hiérarchiquement supérieur, des au moins deux plans de processeurs (102, 103), les mots de données se composant d'une pluralité des caractères binaires.

16. Le procédé de commande d'un bus de données (101) selon la revendication 15, où
dans le premier plan de processeur (102), une première commande de déroulement (221) programmable présente les étapes de procédé suivantes :
synchronisation d'un premier signal de cadencement du bus de données (101) avec un deuxième signal de cadencement pour la commande du bus de données,
génération d'un troisième signal de cadencement pour le deuxième plan de processeur (103), présentant une deuxième commande de déroulement (222) programmable,
détection d'une fenêtre de bits à l'intérieur des données transmises sur le bus de données (101), et où
dans le deuxième plan de processeur (103), la deuxième commande de déroulement (222) programmable présente les étapes de procédé suivantes :
fixation de la taille d'une succession de bits d'identification, lors de la survenance de laquelle, sur le bus de données (101), est activé le procédé de commande bus de données,
fixation du nombre des caractères binaires de chaque mot de données, du format de données et de la vitesse de transmission des données sur le bus de données (101),
émission et réception de signaux de contrôle, et
contrôle des données reçues, à l'aide d'un procédé de contrôle de bloc cyclique.

17. Le procédé de commande d'un bus de données selon la revendication 15 ou 16, le procédé utilisant des instructions pour l'émission et des instructions pour la réception de données et présentant les étapes de procédé suivantes :
stockage en mémoire des instructions pour l'émission de données, dans une première plage d'adresses (321), et
stockage en mémoire des instructions pour la réception de données, dans une deuxième plage d'adresses (322), où
des instructions largement équivalentes, pour la réception et l'émission de données, sont stockées en mémoire,
les instructions équivalentes, pour l'émission et la réception de données, étant stockées en mémoire à des adresses dans la première (321) et la deuxième (322) plage d'adresses, qui se distinguent au niveau d'un offset d'adresse, en particulier qui se distinguent par un bit de valeur maximale de l'adresse, et
saut, de la valeur d'une instruction pour l'émission de données, depuis un emplacement de la première plage d'adresses (321) à l'instruction équivalente, pour la réception de données dans la deuxième plage d'adresses (322), par addition de l'offset d'adresse.
